**Europäisches Patentamt**

**European Patent Office**

**Office européen des brevets**

(19)

(11) Numéro de publication: **0 115 461**
**B1**

(12) **FASCICULE DE BREVET EUROPEEN**

(45) Date de publication du fascicule du brevet:
01.06.88

(51) Int. Cl.⁴: **G 01 M 11/02**

(21) Numéro de dépôt: **84400164.4**

(22) Date de dépôt: **25.01.84**

(54) **Dispositif de contrôle des qualités optiques d'un miroir convexe asphérique et son application au contrôle du miroir convexe d'un télescope.**

(30) Priorité: **28.01.83 FR 8301329**

(43) Date de publication de la demande:
**08.08.84 Bulletin 84/32**

(45) Mention de la délivrance du brevet:
**01.06.88 Bulletin 88/22**

(84) Etats contractants désignés:
**CH DE GB LI**

(56) Documents cités:
**US - A - 3 518 004**

**APPLIED OPTICS, vol. 9, no. 11, novembre 1970, pages 2497-2500, New York, US; J.D. LYTLE: "A suggested procedure for testing large cassegrainian optical systems"**

(73) Titulaire: **R.E.O.S.C. (RECHERCHES ET ETUDES D'OPTIQUE ET DE SCIENCES CONNEXES), 10, rue des Ecoles, Ballainvilliers F-91160 Longjumeau (FR)**

(72) Inventeur: **Espiard, Jean, 16, rue Cordon, F-75015 Paris (FR)**

(74) Mandataire: **Schrimpf, Robert et al, Cabinet Regimbeau 26, Avenue Kléber, F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne le contrôle des qualités optiques d'un miroir convexe asphérique et elle s'applique notamment au contrôle du miroir convexe d'un télescope.

On décrira ci-après la présente invention en référence à cette application typique mais il est bien entendu qu'il ne s'agit là que d'une application parmi d'autres et que l'invention s'applique au contrôle de tout miroir convexe.

Une méthode courante pour contrôler les qualités optiques d'une pièce optique consiste à étudier l'image que produit cette pièce d'un point objet. Pour que cette étude soit possible, l'image doit être réelle et, lorsqu'on veut appliquer une telle méthode au contrôle d'un miroir convexe, lequel produit normalement une image virtuelle, il est nécessaire d'associer au miroir convexe un ou plusieurs éléments optiques auxiliaires qui forment avec le miroir convexe un système optique produisant une image réelle.

Diverses méthodes ont été décrites à cet effet, par exemple les techniques exposées par R.N. Wilson dans la publication «Technical Report» of European Southern Observatory, n° 3, juillet 1974 sous le titre «Test Methods for Secondary Mirrors of Cassegrain Telescopes with Special Reference to the ESO 3.6 Telescope».

L'une de ces méthodes dite «méthode Lytle» utilise comme élément auxiliaire le grand miroir concave du télescope. Cette méthode est décrite plus en détail dans le Technical Report n° 4, août 1974, par le même auteur, sous le titre «Supplementary Tests of the Optics of the ESO 3.6 m Telescope by the Method of Lytle».

Cette méthode exige que le grand miroir concave du télescope soit disponible pour servir de pièce auxiliaire. A titre d'exemple, un télescope Cassegrain de 3 m et plus de diamètre a un miroir convexe dont le diamètre varie de 0,8 à 1,5 m selon l'ouverture relative du grand miroir concave et, pour contrôler ce miroir convexe, on utilise le miroir concave du télescope qui doit être d'excellente qualité.

La présente invention préconise également l'utilisation d'un miroir concave auxiliaire. Selon l'invention, le miroir concave auxiliaire est un miroir de préférence sans défauts zonaux pour obtenir une mesure la plus exacte possible dont la méridienne a la forme d'une sphère ou d'une parabole ou une forme intermédiaire et dont l'ouverture numérique est inférieure ou égale à 0,25.

Le procédé de contrôle, comme celui de Lytle, est une méthode d'autocollimation sur le miroir convexe à contrôler, le miroir auxiliaire étant parcouru deux fois par la lumière, mais la comparaison du dispositif de l'invention et du dispositif préconisé par Lytle conduit notamment aux remarques suivantes:

– Le miroir auxiliaire selon la présente invention a un diamètre qui est seulement légèrement plus grand que celui du miroir convexe à contrôler. Par exemple, pour vérifier un miroir convexe de 0,8 m de diamètre on utilisera un miroir auxiliaire de 1,2 m de diamètre et, pour contrôler un miroir convexe de 1,4 m de diamètre, on utilisera un miroir auxiliaire de 1,6 de diamètre, alors que dans le dispositif de Lytle, on utilise un miroir auxiliaire (le grand miroir du télescope) dont le diamètre est 3,5 m pour les cas cités.

– Dans le dispositif de Lytle, le miroir auxiliaire (c'est-à-dire le grand miroir concave) est en général parabolique et, le plus souvent, hyperbolique alors que dans le dispositif de la présente invention le miroir a une forme allant de la forme sphérique à la forme parabolique et il ne doit pas avoir une forme hyperbolique.

– Dans le dispositif de Lytle, il est dans tous les cas nécessaire de compenser l'aberration sphérique due à la forme du miroir concave et cette compensation se fait habituellement au moyen d'un plus ou moins grand nombre de lentilles. Dans le dispositif de l'invention, si on utilise un miroir auxiliaire sphérique, la compensation générale des aberrations du système est plus facile à obtenir puisqu'il y a moins d'aberrations à compenser; si on utilise une méridienne elliptique, c'est-à-dire une forme intermédiaire entre la sphère et le paraboloïde, la lentille de compensation devient pratiquement inutile. Ainsi, dans tous les cas, le dispositif de l'invention permet une compensation d'aberrations bien meilleure et cette compensation est toujours obtenue avec moins de lentilles que dans le dispositif de Lytle et ces lentilles sont toujours de plus faible puissance. A titre d'exemple, le rapport n° 4 mentionné plus haut indique en page 5 une aberration zonale résiduelle de 1,6 $\lambda$ pic/pic alors que le dispositif de la présente invention permet d'atteindre environ $\lambda$/20 pic/pic.

– Le dispositif de l'invention permet de contrôler à la fois les défauts zonaux et la forme géométrique du miroir alors que le dispositif de Lytle permet de contrôler les défauts zonaux mais ne permet pas de s'assurer de la forme géométrique du miroir et oblige à recourir à une autre méthode, par exemple celle des équerres optiques.

– Le dispositif de l'invention permet un contrôle en laboratoire. Le dispositif de Lytle qui comporte le grand miroir concave du télescope n'est pas utilisable en laboratoire lorsque ce grand miroir est un miroir mince mis en forme par des vérins puisque cette mise en forme ne se fait que le miroir monté dans le télescope et pointant un objet ponctuel stigmatique et situé à l'infini (étoile par exemple).

On décrira ci-après deux exemples de dispositifs conformes à la présente invention, en référence aux figures du dessin joint.

La première figure est un schéma du dispositif appliqué au contrôle d'un miroir convexe de diamètre 0,80 m et la deuxième figure est un schéma du dispositif appliqué au contrôle d'un miroir convexe de diamètre 1,4 m.

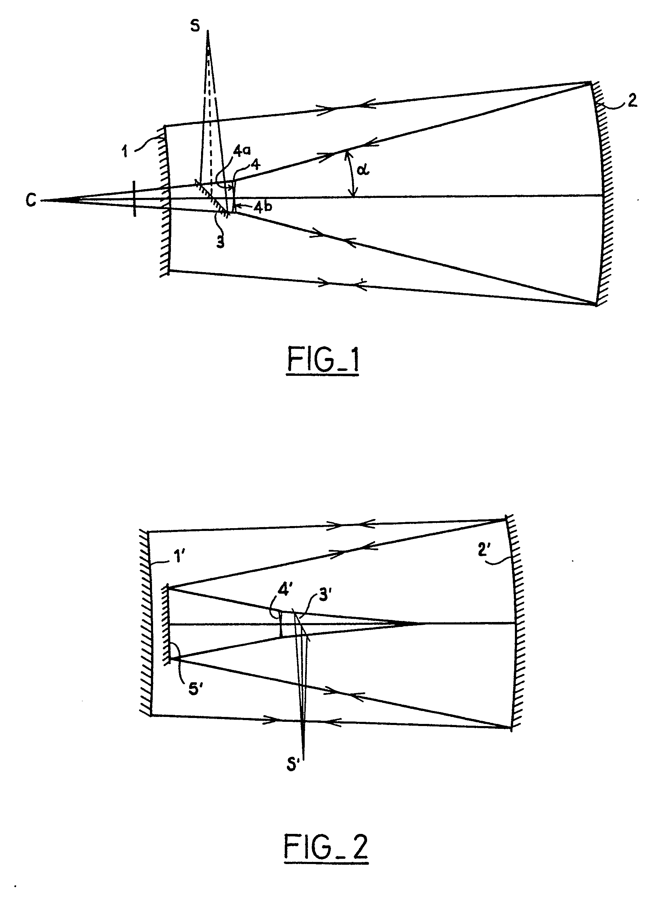

Le dispositif représenté sur la figure 1, pour le contrôle d'un miroir convexe 1 de diamètre 0,80 m, comprend un miroir concave 2 de diamètre 1,2 m et un système compensateur d'aberrations 4 constitué d'une lentille.

Les caractéristiques numériques de ce dispositif sont les suivantes (dimensions en mm):

Miroir convexe (1):
| | |
|---|---|
| Rayon de courbure | 4416,67 |
| demi-diamètre | 389,98 |

Miroir concave auxiliaire (2):
| | |
|---|---|
| Rayon de courbure | 3495,14 |
| Demi-diamètre | 594,26 |
| Distance entre les miroirs (1) et (2) | 2356,98 |

Lentille compensatrice divergente (4):
| | |
|---|---|
| Rayon de courbure de la 1ère face (4a): | 414,50 |
| Demi-diamètre de la 1ère face | 84,27 |
| Rayon de courbure de la 2ème face (4b): | 739,53 |
| Demi-diamètre de la 2ème face | 86,50 |
| Epaisseur | 4,99 |
| Indice de réfraction | 1,5187 |
| Intervalle d'air entre cette lentille et le miroir concave (2) | 2011,25 |

L'angle α (dont le sinus représente l'ouverture numérique de fonctionnement du miroir concave auxiliaire dans le montage) est inférieur à 14°.

D'un point lumineux objet S, après réflexion sur un miroir plan 3, le miroir concave 2 donne une image que l'on fait se former au centre de courbure C du miroir convexe. Après réflexion sur ce miroir, la lumière se réfléchit à nouveau sur le miroir concave 2 pour former finalement une image superposée au point source S. Selon la nature du miroir concave et celle du miroir convexe (sphérique, hyperbolique, parabolique ou asphérique généralisée de révolution) l'image de retour est entachée d'aberrations sphériques que l'on corrige au moyen du système compensateur 4.

La figure 2 représente une disposition similaire comportant, pour le contrôle d'un miroir convexe 1' de diamètre 1,4 m, un miroir concave 2' de diamètre 1,6 m. Dans cette réalisation, le dispositif comporte un miroir plan supplémentaire 5' pour replier le faisceau. Le système compensateur 4' comprend dans cet exemple deux ménisques divergents dont les surfaces convexes regardant par leurs bosses sont pratiquement au contact.

Les caractéristiques numériques de ce dispositif sont les suivantes (dimensions en mm):

Miroir convexe (1'):
| | |
|---|---|
| Rayon de courbure | 18 879,98 |
| demi-diamètre | 693,91 |

Miroir concave auxiliaire (2'):
| | |
|---|---|
| Rayon de courbure | 6761,11 |
| Demi-diamètre | 794,92 |
| distance entre les miroirs (1') et (2') | 2791,72 |

Lentilles compensatrices (4'):
première lentille divergente
| | |
|---|---|
| Rayon de courbure de la 1ère face | 902,88 |
| Demi-diamètre de la 1ère face | 99,26 |
| Rayon de courbure de la 2ème face | 4039,36 |
| Demi-diamètre de la 2ème face | 100,15 |
| Epaisseur | 4,99 |
| Indice de réfraction | 1,5187 |
| Distance à la 2ème lentille | 0,09 |

deuxième lentille divergente
| | |
|---|---|
| Rayon de courbure de la 1ère face | 5255,13 |
| Demi-diamètre de la 1ère face | 100,42 |
| Rayon de courbure de la 2ème face | 762,62 |
| Demi-diamètre de la 2ème face | 101,29 |
| Epaisseur | 4,99 |
| Indice de réfraction | 1,5187 |
| Intervalle d'air entre cette lentille et le miroir concave | 3491,38 |

A titre de comparaison, si l'on utilisait dans le dispositif de la figure 1 le miroir concave du télescope au lieu du miroir auxiliaire, ce miroir concave aurait un diamètre beaucoup plus grand.

On remarquera qu'il suffit d'utiliser un miroir concave ayant la valeur requise pour le rayon de courbure au sommet, la seule condition imposée à la surface concave étant faite parfaitement régulière, c'est-à-dire exempte de défauts zonaux. Une étude de cette surface par interférométrie ou par la méthode de Hartmann permet d'en fixer la nature et l'équation à partir de laquelle est déterminé le compensateur d'aberrations sphériques.

Le dispositif de l'invention limite la longueur des trajets de la lumière dans l'air, ce qui contribue à une plus grande précision des mesures de la surface du miroir convexe. A titre comparatif, les distances entre miroir convexe et miroir auxiliaire sont cinq à dix fois plus grande dans le cas du dispositif de Lytle.

De fait, l'invention fournit une méthode de contrôle en teinte plate qui permet à l'opticien de mettre son miroir convexe en forme (rayon de courbure et coefficient d'asphérisation) et de contrôler aussi la régularité de la surface (défauts zonaux et défauts qui ne sont pas de révolution) alors que le dispositif de Lytle permet généralement de vérifier sur le miroir convexe la présence de défauts zonaux, vérification que l'on effectue en se mettant en teinte plate pour différents diamètres de ce miroir en déplaçant longitudinalement la lentille convergente de compensation et permettant de vérifier la présence de défauts autres que des défauts de révolution.

**Revendications**

1. Dispositif pour le contrôle des qualités optiques d'un miroir convexe asphérique par étude de l'image réelle fournie par un système optique comprenant le miroir convexe (1) à vérifier et un miroir concave auxiliaire (2), selon une méthode d'autocollimation sur le miroir convexe, le miroir concave auxiliaire étant un miroir de préférence, sans défauts zonaux pour obtenir une mesure la plus exacte possible, dont la méridienne a la forme d'une sphère ou d'une parabole ou une forme intermédiaire et dont l'ouverture numérique est inférieure ou égale à 0,25.

2. Dispositif selon la revendication 1, caractérisé en ce que le miroir concave auxiliaire (2) a une méridienne elliptique.

3. Dispositif selon l'une des revendications 1 et 2, caractérisé en ce qu'il comporte au plus deux lentilles de compensation d'aberrations (4).

4. Utilisation d'un dispositif selon l'une des revendications 1 à 3 au contrôle du miroir convexe d'un télescope.

## Claims

1. Aspheric convex mirror optical quality-control arrangement operating by studying the real image provided by an optical system comprising the convex mirror (1) to be checked and an auxiliary concave mirror (2), according to a method of autocollimation on the convex mirror, the auxiliary concave mirror being a mirror preferably without zonal defects in order to obtain the most exact measurement possible, whereof the meridian is in the shape of a sphere or a parabola or an intermediate shape and whereof the numerical opening is less than or equal to 0.25.

2. Arrangement according to Claim 1, characterised in that the auxiliary concave mirror (2) has an elliptical meridian.

3. Arrangement according to one of Claims 1 and 2, characterised in that it comprises at most two lenses (4) for compensating for aberrations.

4. Use of an arrangement according to one of Claims 1 to 3, to the control of a convex telescope mirror.

## Patentansprüche

1. Vorrichtung zum Kontrollieren der optischen Qualität eines konvexen asphärischen Spiegels durch Untersuchen des reellen Bildes, welches durch ein optisches System geliefert wird, das den konvexen Spiegel (1) zum Prüfen und einen konkaven Hilfsspiegel (2) umfasst, nach einem Verfahren der Autokollimation auf den konvexen Spiegel, wobei der konkave Hilfsspiegel, um eine möglichst exakte Messung zu erhalten, vorzugsweise ein Spiegel ohne Zonenfehler ist, dessen Meridianlinien die Form einer Kugel oder einer Parabel oder eine Zwischenform hat, dessen numerische Apertur kleiner oder gleich 0,25 ist.

2. Vorrichtung nach Anspruch 1, dadurch gekennzeichnet, dass der konkave Hilfsspiegel (2) eine elliptische Meridianlinie hat.

3. Vorrichtung nach einem der Ansprüche 1 und 2, dadurch gekennzeichnet, dass sie ferner nicht mehr als zwei Linsen zur Kompensation der Aberrationen (4) umfasst.

4. Verwendung einer Vorrichtung nach einem der Ansprüche 1 bis 3 zum Kontrollieren eines konvexen Spiegels eines Teleskopes.

FIG_1

FIG_2